# EUROPEAN PATENT SPECIFICATION

(11) **EP 0 885 678 B1**
(45) Date of publication and mention of the grant of the patent: **21.07.2004**
(21) Application number: 98850078.1
(22) Date of filing: 14.05.1998
(51) Int. Cl.: B23C 5/22, B23C 5/06

(54) **Face milling cutter**
Stirnfräser
Fraise à surface

(30) Priority: 10.06.1997 SE 9702202
(43) Date of publication of application: 23.12.1998
(73) Proprietor: SECO TOOLS AB, S-737 82 Fagersta (SE)
(72) Inventor: Riviere, Bertrand, 18000 Bourges (FR)
(74) Representative: Taquist, Lennart

(56) References cited:
- EP-A- 0 487 478
- US-A- 3 606 666
- US-A- 4 470 731
- US-A- 5 028 175

## Description

### Background of the invention

The present invention relates to a face milling cutter including a holder, which can be fastened at the end surface of a rotatable spindle, a number of first and second cutting inserts, each having at least one cutting edge and being releaseably attached to the end surface of said holder at a radial distance from the axis of the spindle, said cutting edges extending outwardly from the end surface of said holder, such that said cutting edges freely can come into engagement with and machine a surface of a work piece, means for releaseably securing said cutting insert at said holder by means of a central opening in said cutting insert, said cutting inserts being peripherally distributed around said holder, said first cutting insert comprising cutting edges directed substantially in the axial direction and said second cutting insert comprising cutting edges directed substantially in the radial direction. The invention further relates to a shim for the tool, a method for determining the axial position of cutting inserts provided in a face milling cutter as well as a milling insert.

### Prior art

Through US-A-4,470,731 is previously known a face milling cutter including wiper inserts provided at the end surface of the milling body. A drawback with the known milling cutter is that the position of the wiper insert must be adjusted by hand with the aid of three screws, whereof two screws are provided to lock the position of the shim by friction in the adjusted position. There is a risk that the measured, correct position is displaced in connection with the adjustment or during machining.

### Objects of the invention

One object of the present invention is to provide a face milling cutter having simply adjustable wiper inserts.

Another object of the present invention is to provide a quick and precise method for determining the axial position of cutting inserts provided in a face milling cutter.

### Short description of the drawings

These and other objects have been obtained by a face milling cutter, a method and a milling insert according to the features and characteristics laid down in the subsequent claims with reference to the drawings, wherein:

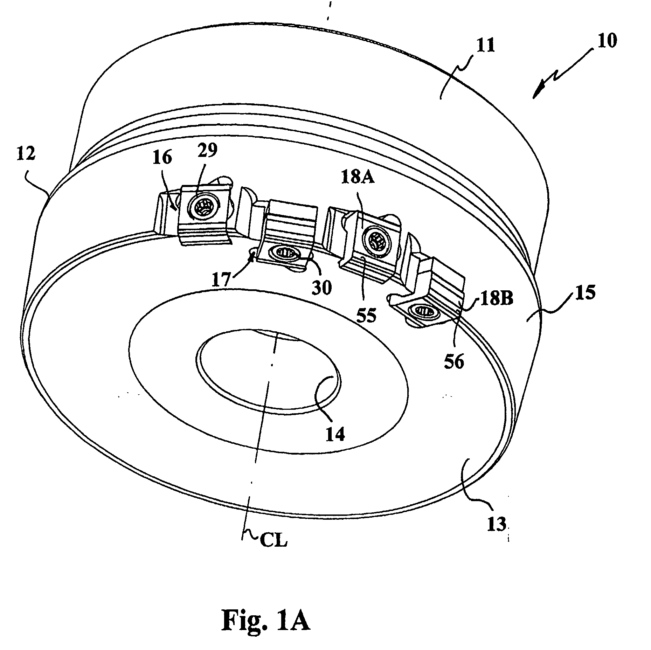

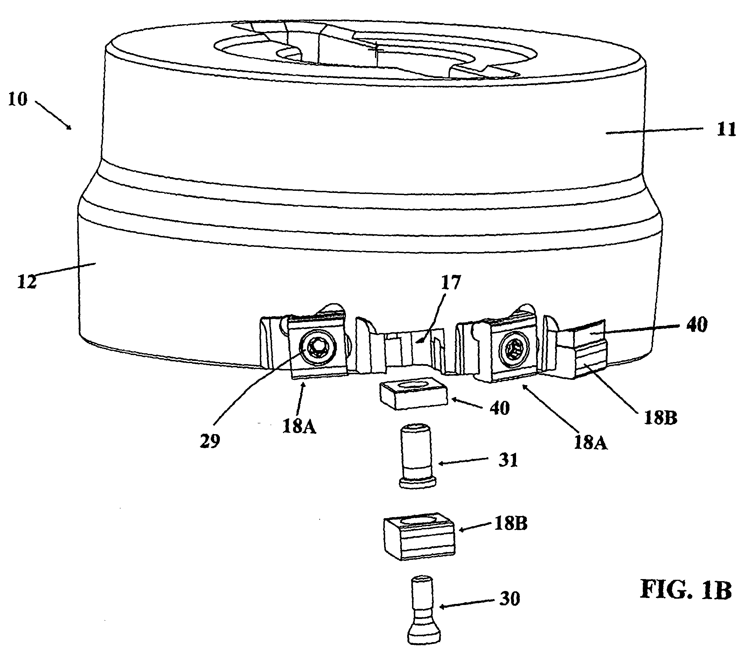

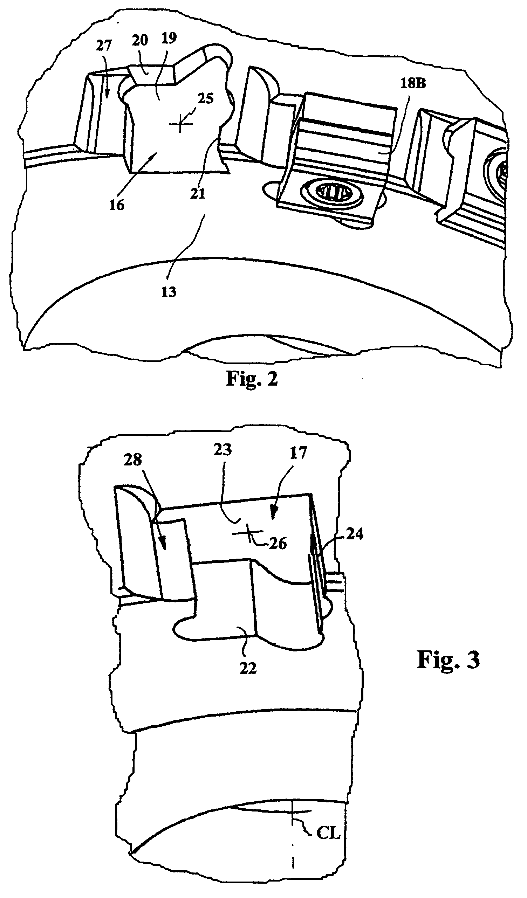

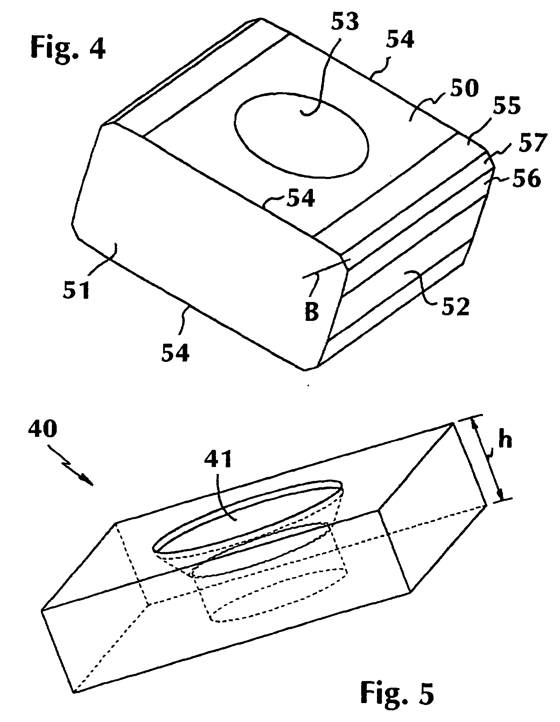

Fig. 1A shows a face milling cutter according to the present invention, in a perspective view; Fig. 1B shows a face milling cutter according to the present invention, partly in an exploded view; Figs. 2 and 3 show parts of the tool shown in Fig. 1A, in a perspective view; Fig. 4 shows a perspective view of a cutting insert according to the present invention for the tool and Fig. 5 shows a perspective view of a shim for the tool according to the present invention.

### Detailed description of the invention

Figs. 1A, 1B 2 and 3 show the face milling cutter 10 according to the present invention which comprises a holder or body 11 which shall be mounted to a spindle, not shown. The holder has an edge portion 12 with an essentially cylindrical jacket surface 15, a ring-shaped end surface 13, and a central hole 14. A number of first and second pockets 16 and 17 are provided in the area of intersection between the envelope surface 15 and the ring-shaped surface 13, each of which are provided to hold a cutting insert 18A and 18B. It is understood that further pockets and cutting inserts than shown are arranged at the tool. Each first pocket 16 (Fig. 2) consists of a recess in the body 11 and forms a radial support surface 19, an axial support surface 20 and a tangential support surface 21. The radial support surface 19 is provided to transfer radial cutting forces from the cutting insert 18A during the milling operation. The axial support surface 20 is provided to transfer axial cutting forces from the cutting insert 18A. The tangential support surface 21 is provided to transfer tangential cutting forces from the cutting insert 18A. Each second pocket 17 (Fig. 3) consists of a recess in the body 11 and forms a radial support surface 22, an axial support surface 23 and a tangential support surface 24. The function of the support surfaces 22-24 is the same as explained above in connection with the support surfaces 19-21. The first and second pockets 16 and 17 are provided to receive cutting inserts 18A and 18B, which are inclined about 90° relative to each other. This means that the cutting inserts 18A are tangentially mounted with central threaded holes directed substantially towards the axis of rotation CL of the milling cutter and that the cutting inserts 18B are end mounted with central threaded holes directed substantially parallel with the axis of rotation of the milling cutter. Every other cutting insert in the tool's periphery defines a second cutting insert 18B and the remaining cutting inserts constitute the first cutting inserts 18A. The pockets may be evenly or unevenly distributed round the periphery of the body. Immediately in front of each pocket 16 and 17 is provided a chip space 27 and 28.

The cutting insert according to Fig. 4 for example can be made of a cutting tool material available on the market today, wherein tungsten carbide is a preferred material The insert is preferably manufactured by grinding.

The face milling cutter has first 18A and second cutting inserts 18B, which are identically square and comprise substantially planar parallel side faces 50, substantially planar parallel first side surfaces 51, substantially planar parallel second side surfaces 52 and the central opening 53. Four cutting edges 54 are provided in lines of intersection between said surfaces 50,51,52. The cutting edge 54, which lies in the plane of the connected first edge surface 51, is defined at the transition between the side surface 50 and the second edge surface 52, at least partly by a planar or curved first chamfer 57. The chamfer 57 is surrounded by two substantially planar second chamfers 55, 56 symmetrically arranged about a bisector B of the cutting corner. At milling, the cutting edge at the chamfer 55 of the first cutting insert 18A and the cutting edge of the second chamfer 56 of the second cutting insert 18B are active. This division of work between adjacent cutting insert requires that the cutting inserts shall be able to be exactly adjusted relative to each other, which can be done with the aid of the shim 40. The size of the cutting inserts is generally based on the feed per revolution for full utilization of the available cutting edge. The cutting inserts 18A and 18B are identical, which makes confusion of these impossible in connection with mounting of cutting inserts in the milling tool. When the cutting inserts have worn out and shall be exchanged, the tool is provided such that the worn cutting inserts 18A can be transferred to the pockets 17 while the worn the cutting inserts 18B can be transferred to the pockets 16 for presenting fresh edges. This can be done due to that only four cutting corners of eight of each cutting insert wear out in each pocket. The major cutting edge of the first cutting insert 18A projects radially just as far as the radially extreme part of the cutting edge of the second cutting insert 18B. The cutting inserts may alternatively have other basic shapes and sizes, such as rectangular or triangular.

According to the preferred embodiment each screw 30 is fastened in a hollow fastening screw 31 tightened into the pocket 17. The fastening screw has a collar which is intended to abut against a corresponding shoulder of the hole 41 in the shim 40.

The threaded hole 25, 26 is placed such that when mounting the cutting insert by tightening a screw 29, 30, the cutting insert is forced in direction towards all said support surfaces in the pocket. Each cutting insert 18A is positioned with a clearance angle in relation to the workpiece surface. This angle is usually less than 15° and is preferably in the magnitude of 7°.

A shim 40 according to Fig. 5, is provided to be fitted into in each pocket 17 for an end mounted cutting insert 18B. The shim is substantially polygonal and preferably square. The shim has a centrally positioned hole provided to receive the fastening screw 31. The biggest surface of the shim 40 is somewhat less than the corresponding side of the cutting insert 18B. The thickness h of the shim is in the magnitude of at least 50 % of the thickness of the cutting insert 18B. Shims 40 of different thicknesses shall be accessible at assembling of the mill. The thickness is chosen in the interval 5 of µm more or less at a level of about 4 mm. The total number of shims 40 to choose among, is in the magnitude of 8-15, preferably about 11. Stated another way the interval is about 4 mm ± X * 5 µm, where X is integers of 0 to 7.

The mill 10 is mounted as follows, reference being had primarily to Fig. 1B. The first cutting insert 18A is mounted first, by pushing one of its planar sides by hand into the pocket 16 against the radial support surface 19 and against the support surfaces 20 and 21, whereafter the screw 29 is inserted into the hole of the cutting insert and is threaded into in the threaded hole 25. Thereby the cutting insert 18A will be forced both against the radial support surface 19 and against the support surfaces 20 and 21 since the center axis of the boring is provided closer to the support surfaces 20,21 than to the center of the threaded hole.

Then in connection with mounting the second cutting insert 18B the fastening screw 31 is first brought through the central hole 41 of the shim 40. The shim is brought to abutment against the axial support surface 23 in the pocket 17 simultaneously as the fastening screw is tightened. At tightening of the fastening screw the shim will not be displaced in any direction but is pressed hard against the support surface 17. The shim 40 may in that position project somewhat from the envelope surface 15 in the radial direction of the milling body. Subsequently one planar side of the cutting insert is pushed into in the pocket 17 against the shim 40 and against the support surfaces 22 and 24, whereafter the screw 30 is inserted into the hole of the cutting insert and is threaded into in the threaded boring of the fastening screw. Thereby the cutting insert is forced partly against the shim 40 and partly against the support surfaces 22 and 24 by having the center axis of the boring provided closer to the support surfaces 22,24 than to the center of the threaded hole.

The position of for example the second chamfer 55 of the cutting insert 18B is then measured in relation to the cutting insert 18A and if the position of the cutting insert 18B is about 0.04 mm below the position of the cutting insert 18A the adjustment is ideal for the second cutting inserts 18B to generate the surface. The positioned cutting insert 18B then constitutes a reference for the following adjustments of the cutting inserts 18B. If a cutting insert due to manufacturing tolerances of the holder differ too much from the reference value, this can be attended by choosing another shim with a more suitable thickness. When a face milling cutter once is calibrated it is sufficient just to swap cutting inserts 18A, 18B if these have worn out and yet retain the fine position.

The method comprises in other words the following steps:- arrange a number of shims, everyone being smaller in the thickness direction and width direction than the associated cutting insert 18B, said thickness h of the shim 40 being chosen from a set up of several shims which difference in thickness is in steps of about 5 µm,- tangentially mount a first cutting insert (18A), - end mount a shim with a known thickness,- end mount a second cutting insert (18B) against the shim (40) and compare the position with that of the first cutting insert (18A),- screw the second cutting insert (18B) firmly against the shim wherein the thickness (h) of the shim determines the major cutting edge position of the second cutting insert relative to the first cutting insert (18A),- exchange shim to a shim with a suitable thickness if that axial value does not correspond to the desired position,- repeat the above-captioned steps until the tool is wholly provided with cutting inserts.

The invention is in no manner limited to the above-described embodiment, but can be varied freely within the limits of the subsequent claims.

## Claims

1. Face milling cutter comprising a holder (11), which can be secured at the end surface of a rotatable spindle, a number of cutting inserts (18A,18B), every of which having at least a major cutting edge and a secondary cutting edge and being releaseably attached to said holder at a radial distance from the axis of rotation (CL) of the cutter, said cutting edges extending outwardly of the envelope surface (15) and the end surface (13) of said holder respectively, wherein means (29,30) are provided for releaseably securing said cutting insert at said holder by means of a central opening in said cutting insert, said cutting inserts being peripherally distributed around said holder (10), said tool comprising first cutting inserts (18A) the major cutting edges of which being essentially axially directed, and second cutting inserts (18B), the major cutting edges of which being essentially radially directed relative to the holder (11), said second cutting inserts (18B) being provided substantially to generate a planar surface on the work piece, said second cutting insert (18B) having width and a thickness, each said second cutting insert (18B) resting on a shim (40), **characterized in that** the shim (40) at least in the width direction is smaller than the associated cutting insert (18B), and **in that** the thickness (h) of the shim is provided to determine the axial position of the major cutting edge of the second cutting insert relative to the first cutting insert (18A) and **in that** the face milling cutter comprises shims (40) of different thicknesses.

2. Face milling cutter according to claim 1, wherein every other cutting insert in the cutter periphery is a second cutting insert (18B) and wherein the thickness of the shim (40) is smaller than the thickness of the associated cutting insert (18B) and wherein the thickness (h) of the shim is chosen from the interval about 4 mm ± X * 5 µm, where X is integers of 0 to 7.

3. Face milling cutter according to claims 1 or 2, wherein the shim (40) is provided to be fastened by a first means (31) which is provided to be fastened in a hole (26) in an axial support surface (23) of the holder, said support surface being essentially parallel with or somewhat inclined relative to the end surface (13).

4. Face milling cutter according to claims 1, 2 or 3, wherein the major cutting edge of the first cutting insert (18A) projects just as far as the radially extreme part of the cutting edge of the second cutting insert (18B).

5. Face milling cutter according to anyone of the preceding claims, wherein the first and the second cutting inserts (18A,18B) are identical and comprise substantially plane-parallel side faces (50), substantially plane-parallel first side surfaces (51), substantially plane-parallel second side surfaces (52) and the central opening (53), wherein four cutting edges (54) are provided at lines of intersection between said surfaces (50,51,52) and wherein the cutting edge (54) in the transition between the side surface (50) and the second side surface (52) is described by a first chamfer (57).

6. Face milling cutter according to anyone of the preceding claims, wherein the threaded hole (25,26) in the axial support surface is placed such that when mounting a cutting insert by screwing a screw (29, 30) the cutting insert is forced in direction towards all said support surfaces in the pocket.

7. Method to determine the axial position of a cutting insert provided in a face milling cutter, said face milling cutter comprising a holder (11), which can be secured at the end surface of a rotatable spindle, said face milling cutter will include a number of cutting inserts (18A,18B), every other of which has at least one major cutting edge and one secondary cutting edge and can be releaseably secured to said holder at a radial distance from the axis of rotation (CL) of the cutter, said cutting edges shall extend outwardly from the envelope surface (15) and the end surface (13) of said holder, wherein means (29,30) will be provided for releaseable fastening of said cutting insert at said holder by means of a central opening in said cutting insert, said cutting inserts shall be distributed peripherally around said holder (10), said tool will include first cutting inserts (18A) the major cutting edges of which are essentially axially directed and second cutting inserts (18B), the major cutting edges of which are essentially radially directed relative to the holder (11), said second cutting inserts (18B) shall substantially generate a planar surface on the work piece, **characterized in that** the method comprises the following steps:
- arrange a number of shims, which everyone is smaller than an associated cutting insert (18B) in the thickness direction and the width direction, wherein the thickness (h) of the shim (40) is chosen from a set of several shims differing in thickness in steps of about 5 µm,
- tangentially mount a first cutting insert (18A),
- end mount a shim with a known thickness,
- end mount a second cutting insert (18B) against the shim (40) and compare the position with that of the first cutting insert (18A),
- tighten the second cutting insert (18B) against the shim, wherein the thickness (h) of the shim determines the position of the major cutting edge of the second cutting insert relative to the first cutting insert (18A),
- exchange shim to a shim with suitable thickness if the previous axial value does not correspond to the desired position,
- repeat the above-captioned steps until the tool is wholly provided with cutting inserts and such that the face milling cutter comprises shims (40) of different thicknesses.

## Patentansprüche

1. Stirnfräser mit einem Halter (11), der an der Endfläche einer drehbaren Spindel angebracht werden kann, mit einer Anzahl von Schneideinsätzen (18A, 18B), deren jeder mindestens eine Hauptschneidkante und eine Nebenschneidkante hat und lösbar an dem Halter in einem radialen Abstand von der Drehachse (CL) des Fräsers angebracht ist, wobei sich die Schneidkanten nach außerhalb der Hüllfläche (15) bzw. der Endfläche (13) des Halters erstrecken, Mittel (29, 30) für die lösbare Anbringung des Schneideinsatzes an dem Halter mittels einer zentralen Öffnung in dem Schneideinsatz vorgesehen sind, die Schneideinsätze um den Halter (10) am Umfang verteilt sind, das Werkzeug erste Schneideinsätze (18A), deren Hauptschneidkanten im wesentlichen axial gerichtet sind und zweite Schneideinsätze (18B), deren Hauptschneidkanten im wesentlichen radial relativ zu dem Halter (10) gerichtet sind, aufweist, die zweiten Schneideinsätze (18B) vorgesehen sind, um im wesentlichen eine ebene Fläche auf dem Werkstück zu erzeugen, der zweite Schneideinsatz (18B) eine Breite und eine Dicke hat und wobei der zweite Schneideinsatz (18B) auf einem Abstandsstück (40) aufsitzt, **dadurch gekennzeichnet, daß** das Abstandsstück (40) mindestens in der Breitenrichtung kleiner ist als der zugehörige Schneideinsatz (18B) und daß die Dicke (h) des Abstandsstückes vorgesehen ist, um die axiale Position der Hauptschneidkante des zweiten Schneideinsatzes relativ zu dem ersten Schneideinsatz (18A) zu bestimmen, und daß der Stirnfräser Abstandsstücke (40) unterschiedlicher Dicken aufweist.

2. Stirnfräser nach Anspruch 1, wobei jeder zweite Schneideinsatz im Schneidumfang ein sekundärer bzw. zweiter Schneideinsatz (18B) ist und die Dicke des Abstandsstückes (40) kleiner ist als die Dicke des zugeordneten Schneideinsatzes (18B), wobei die Dicke (h) des Abstandsstückes aus dem Intervall etwa 4 mm ± X * 5 µm ausgewählt ist, wobei X eine ganze Zahl von 0 bis 7 ist.

3. Stirnfräser nach Anspruch 1 oder 2, wobei das Abstandsstück (40) vorgesehen ist, durch ein erstes Mittel (31) befestigt zu werden, welches vorgesehen ist, in einem Loch (26) in einer axialen Stützfläche (23) des Halters befestigt zu werden, wobei die Stützfläche zu der Endfläche (13) im wesentlichen parallel oder etwas geneigt ist.

4. Stirnfräser nach den Ansprüchen 1, 2 oder 3, wobei die Hauptschneidkante des ersten Schneideinsatzes (18A) gerade so weit vorsteht wie der radial äußerste Teil der Schneidkante des zweiten Schneideinsatzes (18B).

5. Stirnfräser nach einem der vorhergehenden Ansprüche, wobei der erste und der zweite Schneideinsatz (18A, 18B) identisch sind und im wesentlichen planparallele Seitenflächen (50), im wesentlichen planparallele erste Seitenflächen (51), im wesentlichen planparallele zweite Seitenflächen (52) und die Mittelöffnung (53) aufweisen, wobei vier Schneidkanten (54) an Schnittlinien zwischen den Flächen (50, 51, 52) vorgesehen sind und die Schneidkante (54) beim Übergang zwischen der Seitenfläche (50) und der zweiten Seitenfläche (52) durch eine erste Abfasung (57) beschrieben wird.

6. Stirnfräser nach einem der vorhergehenden Ansprüche, wobei das mit Gewinde versehene Loch (25, 26) in der axialen Stützfläche derart plaziert ist, daß bei der Anbringung eines Schneideinsatzes durch Festschrauben einer Schraube (29, 30) der Schneideinsatz in Richtung zu allen den Stützflächen in der Tasche gedrückt wird.

7. Verfahren zum Bestimmen der axialen Position eines Schneideinsatzes, der in einem Stirnfräser vorgesehen ist, wobei der Stirnfräser einen Halter (11) aufweist, der an der Endfläche einer drehbaren Spindel angebracht werden kann, der Stirnfräser eine Anzahl von Schneideinsatzen (18A, 18B) einschließt, deren jeder zweite mindestens eine Hauptschneidkante und eine Nebenschneidkante hat und lösbar an dem Halter in einem radialen Abstand von der Drehachse (CL) des Fräsers angebracht werden kann, die Schneidkanten sich von der Hüllfläche (15) und der Endfläche (13) des Halters nach außen erstrecken sollen, wobei Mittel (29, 30) vorgesehen werden für das lösbare Befestigen des Schneideinsatzes an dem Halter mittels einer Mittelöffnung in dem Schneideinsatz, die Schneideinsätze am Umfang um den Halter (10) verteilt werden sollen, das Werkzeug erste Schneideinsätze (18A) aufweist, deren Hauptschneidkanten im wesentlichen axial gerichtet sind, und zweite Schneideinsätze (18B) aufweist, deren Hauptschneidkanten relativ zu dem Halter (11) im wesentlichen radial gerichtet sind, und wobei die zweiten Schneideinsätze (18B) im wesentlichen eine ebene Fläche auf dem Werkstück erzeugen sollen, **dadurch gekennzeichnet, daß** das Verfahren die folgenden Schnitte aufweist:
- Anordnen einer Anzahl von Abstandsstücken, deren jedes kleiner ist als ein zugeordneter Schneideinsatz (18B) in der Dickenrichtung und der Breitenrichtung, wobei die Dicke (h) des Abstandsstückes (40) aus einer Gruppe verschiedener Abstandsstücke ausgewählt wird, die sich in der Dicke in Stufen von etwa 5 µm unterscheiden,
- tangentiales Anbringen eines ersten Schneideinsatzes (18A),
- Endbefestigen eines Abstandsstückes mit einer bekannten Dicke,
- Endbefestigen eines zweiten Schneideinsatzes (18B) gegen das Abstandsstück (40) und Vergleichen der Position mit der des ersten Schneideinsatzes (18A),
- Festziehen des zweiten Schneideinsatzes (18B) gegen das Abstandsstück, wobei die Dicke (h) des Abstandsstückes die Position der Hauptschneidkante des zweiten Schneideinsatzes relativ zu dem ersten Schneideinsatz (18A) bestimmt,
- Austauschen des Abstandsstückes mit einem Abstandsstück geeigneter Dicke, wenn der vorherige axiale Wert nicht der gewünschten Position entspricht,
- Wiederholen der oben genannten Schritte, bis das Werkzeug ganz mit Schneideinsätzen versehen ist, und derart, daß der Stirnfräser Abstandsstücke (40) unterschiedlicher Dicken aufweist.

## Revendications

1. Fraise d'attaque frontale comprenant un support (11), pouvant être fixé à la surface d'extrémité d'une broche rotative, un certain nombre de plaquettes de coupe (18A, 18B), chacune d'entre elles comportant au moins une arête de coupe principale et une arête de coupe secondaire et étant fixée de façon amovible au support à une certaine distance radiale de l'axe de rotation (CL) de la fraise, les arêtes de coupe s'étendant vers l'extérieur de respectivement la surface enveloppe (15) et la surface d'extrémité (13) du support, dans laquelle sont prévus des moyens (29, 30) de fixation amovible de la plaquette de coupe sur le support au moyen d'une ouverture centrale dans la plaquette de coupe, les plaquettes de coupe étant réparties en périphérie autour du support (10), le dit outil comprenant des premières plaquettes de coupe (18A), dont les arêtes- de coupe principales sont essentiellement dirigées axialement, et des secondes plaquettes de coupe (18B), dont les arêtes de coupe principales sont essentiellement dirigées radialement par rapport au support (11), les secondes plaquettes de coupe (18B) étant agencées pour engendrer sensiblement une surface plane sur la pièce à usiner, la seconde plaquette de coupe (18B) ayant une certaine largeur et une certaine épaisseur, chaque seconde plaquette de coupe (18B) reposant sur une cale (40), **caractérisée par le fait que** la cale (40), au moins dans la direction de l'épaisseur, est plus petite que la plaquette de coupe associée (18B), et que l'épaisseur (h) de la cale est prévue pour déterminer la position axiale de l'arête de coupe principale de la seconde plaquette de coupe par rapport à la première plaquette de coupe (18A) et que la fraise d'attaque frontale comprend des cales (40) de différentes épaisseurs.

2. Fraise d'attaque frontale selon la revendication 1, dans laquelle chaque autre plaquette de coupe dans la périphérie de la fraise est une seconde plaquette de coupe (18B) et dans laquelle l'épaisseur de la cale (40) est inférieure à l'épaisseur de la plaquette de coupe associée (18B) et dans laquelle l'épaisseur (h) de la cale est choisie dans l'intervalle d'environ 4 mm ± X * 5 µm, où X est des entiers allant de 0 à 7.

3. Fraise d'attaque frontale selon l'une des revendications 1 et 2, dans laquelle la cale (40) est agencée pour être fixée par un premier moyen (31) qui est prévu pour être fixé dans un trou (26) d'une surface de support axiale (23) du support, la surface support étant sensiblement parallèle à, et quelque peu inclinée sur, la surface d'extrémité (13).

4. Fraise d'attaque frontale selon l'une des revendications 1 à 3, dans laquelle l'arête de coupe principale de la première plaquette de coupe (18A) fait saillie exactement aussi loin que la partie radialement extrême de l'arête de coupe de la seconde plaquette de coupe (18B).

5. Fraise d'attaque frontale selon l'une quelconque des revendications précédentes, dans laquelle les premières et secondes plaquettes de coupe (18A, 18B) sont identiques et comprennent des surfaces latérales sensiblement planes et parallèles (50), des premières surfaces latérales sensiblement planes et parallèles (51), des secondes surfaces latérales sensiblement planes et parallèles (52) et l'ouverture centrale (53), et où quatre arête de coupe (54) se trouvent à des lignes d'intersection entre les dites surfaces (50, 51, 52) et dans laquelle l'arête de coupe (54) dans la transition entre la surface latérale (50) et la seconde surface latérale (52) est décrite par un premier chanfrein (57).

6. Fraise d'attaque frontale selon l'une quelconque des revendications précédentes, dans laquelle le trou taraudé (25, 26) dans la surface support axiale est situé de telle sorte que, au montage d'une plaquette de coupe par vissage d'une vis (29, 30), la plaquette de coupe est forcée dans une direction vers toutes les surfaces support dans la poche.

7. Procédé de détermination de la position axiale d'une plaquette de coupe installée dans une fraise d'attaque frontale, la fraise d'attaque frontale comprenant un support (11), pouvant être fixé à la surface d'extrémité d'une broche rotative, la fraise d'attaque frontale étant prévue pour recevoir un certain nombre de plaquettes de coupe (18A, 18B), chacune des autres ayant au moins une arête de coupe principale et une arête de coupe secondaire et pouvant être fixée de façon amovible au support à une certaine distance radiale de l'axe de rotation (CL) de la fraise, les arêtes de coupe devant s'étendre vers l'extérieur depuis la surface enveloppe (15) et la surface d'extrémité (13) du support, dans lequel seront prévus des moyens (29, 30) de fixation amovible de la plaquette de coupe sur le support au moyen d'une ouverture centrale dans la plaquette de coupe, les plaquettes de coupe devant être réparties de façon périphérique autour du support (10), le dit outil devant comprendre des premières plaquettes de coupe (18A) dont les arêtes de coupe principales sont essentiellement dirigées axialement et des secondes plaquettes de coupe (18B), dont les arêtes de coupe principales sont essentiellement dirigées radialement par rapport au support (11), les secondes plaquettes de coupe (18B) devant engendrer une surface sensiblement plane sur la pièce à usiner, **caractérisé par le fait que** le procédé comprend les étapes suivantes :
on dispose un certain nombre de cales, chacune étant plus petite qu'une plaquette de coupe associée (18B) dans la direction de l'épaisseur et la direction de la largeur, dans lequel l'épaisseur (h) de la cale (40) est choisie dans un jeu de plusieurs cales d'épaisseurs différentes par pas d'environ 5 µm,
on monte tangentiellement une première plaquette de coupe (18A),
on monte en extrémité une cale d'épaisseur connue, on monte en extrémité une seconde plaquette de coupe (18B) contre la cale (40) et on compare la position à celle de la première plaquette de coupe (18A),
on fixe la seconde plaquette de coupe (18B) contre la cale, l'épaisseur (h) de la cale déterminant la position de l'arête de coupe principale de la seconde plaquette de coupe par rapport à la première plaquette de coupe (18A),
on échange la cale contre une cale d'épaisseur convenable si la précédente valeur axiale ne correspond pas à la position souhaitée,
on répète les étapes mentionnées ci-dessus jusqu'à ce que l'outil soit entièrement pourvu de plaquettes de coupe et de façon que la fraise d'attaque frontale comprenne des cales (40) d'épaisseurs différentes.
